# EUROPEAN PATENT APPLICATION

(11) **EP 0 909 609 A1**
(43) Date of publication of application: **21.04.1999**
(21) Application number: 98114596.4
(22) Date of filing: 04.08.1998
(51) Int. Cl.: B23Q 5/40

(54) **Drive device for a feed member in a machine tool**

(30) Priority: 14.10.1997 JP 294984/97
(71) Applicant: KITAMURA MACHINERY CO., LTD., Takaoka-shi, Toyama-ken 939-11 (JP)
(72) Inventor: Kitamura,Akihiro, of c/o Kitamura Machinery Co.,Lt, Toyama-ken,939-11 (JP); Kitamura,Kousaku, of c/o Kitamura Machinery Co.,Lt, Toyama-ken,939-11 (JP); Yamada,Shigeru, of c/o Kitamura Machinery Co.,Lt, Toyama-ken,939-11 (JP)
(74) Representative: Patentanwälte Ruff, Beier, Schöndorf und Mütschele

(57) **Abstract**

In a drive device for a feed member in a numerical controlled machine tool in which the feed member (11) is driven in a feeding direction by a ball screw (12) and a ball nut (13), the ball screw being parallel to the feeding direction and rotatably supported by bearings (17) to be driven, the ball nut being fixedly mounted on the feed member and meshing with the ball screw via balls, the ball screw is connected at its both ends to two servo motors (14a,14b), respectively. The two servo motors are so synchronously operated that the ball screw is rotated in a predetermined rotation direction whereby the feed member is fed in the corresponding feeding direction.

## Description

### Background of the Invention

### Field of the Invention

The present invention relates to a drive device for a feed member in a numerical controlled machine tool in which the feed member is driven in a feeding direction by a ball screw and a ball nut, the ball screw being parallel to the feeding direction and rotatably supported by bearings to be driven, the ball nut being fixedly mounted on the feed member and meshing with the ball screw via balls.

### Description of the Prior Art

In a conventional drive device for a feed member in a numerical controlled machine tool, a ball screw is connected at its one end to a servo motor and is driven exclusively by said servo motor.

In a numerical controlled machine tool, each feed member is required to be fed faster and faster in these days. For feeding the feed member at a high speed, the maximum feeding speed must be increased, and also the maximum acceleration rate and the maximum deceleration rate must be increased. In other words, a rapid start and a rapid stop are required in feeding steps .

The balls located between the ball nut and the ball screw must be rotated at a high speed for fast feedings. However there is an upper limit for avoiding a seizure to the peripheral speed of the balls and the peripheral speed of the ball screw. Therefore the rotation speed of the the ball screw and its diameter have also upper limits in the conventional drive device.

On the other hand, a large motor having a large motor torque has been provided for increasing the maximum acceleration rate. However said motor is also large in its inertial load so that the acceleration rate can not be increased so much.

### Summary of the Invention

The object of the present invention is to provide a drive device for a feed member in a numerical controlled machine tool, which can be sufficiently adapted to high speed feeding.

According to the present invention, in a drive device for a feed member in a numerical controlled machine tool in which the feed member is driven in a feeding direction by a ball screw and a ball nut, the ball screw being parallel to the feeding direction and rotatably supported by bearings to be driven, the ball nut being fixedly mounted on the feed member and meshing with the ball screw via balls, the ball screw is connected at its both ends to two servo motors, respectively, and the two servo motors are so synchronously operated that the ball screw is rotated in a predetermined rotation direction whereby the feed member is fed in the corresponding feeding direction.

The feed member is preferably a table, a saddle, or a head.

The ball screw is driven via its both ends, according to the present invention, so that the torsional rigidity of the ball screw required can be reduced to half value, for instance, whereby its diameter can be also reduced. The smaller is the ball screw in its diameter, the faster it can be rotated. In such a case, the peripheral speed of the ball screw and the rotation speed of each ball are not increased so much as a result of decreased diameter of the ball screw.

The two servo motors are provided for driving the ball screw via its both ends, according to the invention, so that the rotor inertia of each servo motor can be decreased whereby the maximum acceleration rate and the maximum deceleration rate can be increased.

The ball screw is driven synchronously via both ends, according to the present invention, so that its torsion occurred in feeding steps can be averaged or reduced whereby the feeding accuracy can be improved.

Therefore the drive device for a feed member according to the present invention can be sufficiently adapted to high speed feeding.

### Brief Description of the Drawing

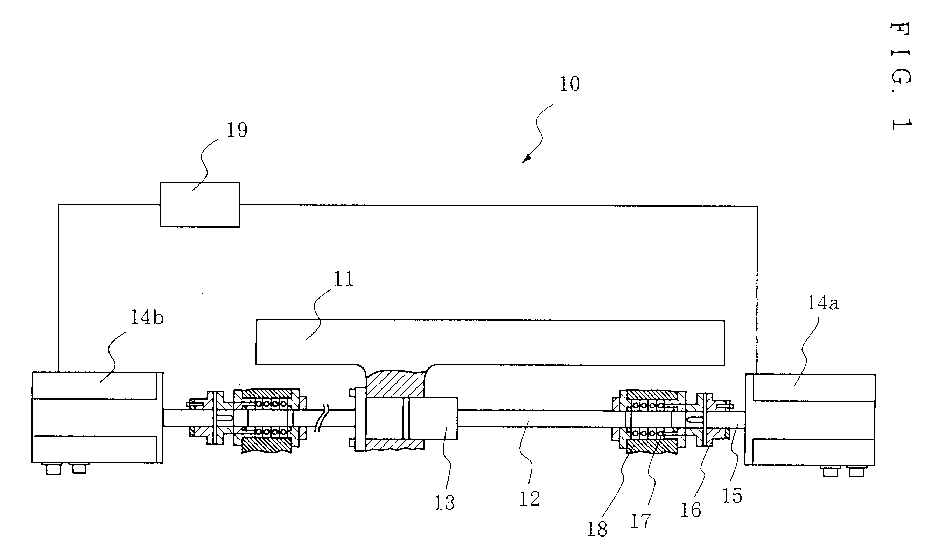

Fig. 1 is a side view showing a preferred embodiment of a drive device for a feed member in a numerical controlled machine tool according to the present invention.

### Description of the Preferred Embodiment

A preferred embodiment according to the present invention is described hereinafter with reference to the drawing.

A drive device 10 for a feed member 11, for instance, a table11 in a numerical controlled machine tool, comprises a ball screw 12 and ball nuts 13. The ball screw 12 and ball nuts 13 cooperate with each other for feeding the feed member 11.

The table 11 is guided by guide means (not shown) so as to be slide along the ball screw 12 or in a feeding direction.

The table 11 has a protrude portion on the under side thereof, on which the ball nuts 13 is fixedly mounted. The ball nuts 13 is a double type, in which a preload is subjected between the ball screw 12 and the ball nuts 13 so that the backlash is decreased whereby the feeding accuracy can be improved.

The ball screw 12 is meshed with the ball nut 12 via balls (not shown). The ball screw 12 is rotatably supported at near both ends thereof by bearings 17. The bearings 17 are mounted on support portions 18 of the machine tool, respectively.

The ball screw 12 is connected at its both ends to drive shafts of survo motors 14a, 14b via couplings 16, respectively.

The two servo motors 14a, 14b are controlled by control means 19 in synchronous manner so that the feed screw 12 is rotated in a predetermined rotation direction whereby the table 11 is fed in the corresponding feeding direction.

The recent servo technic is excellent enough to operate two servo moters in substantially fully synchronous manner.

The ball screw 12 is synchronously driven via both ends, so that the torsional rigidity of the ball screw 12 required can be reduced to half value, for instance, whereby its diameter can be also reduced. The smaller is the ball screw 12 in its diameter, the faster it can be rotated. In such a case, the peripheral speed of the ball screw 12 and the rotation speed of each ball are not increased so much as a result of decreased diameter of the ball screw 12.

The two servo motors 14a, 14b are provided for driving the ball screw 12 via its both ends, so that the rotor inertia of each servo motor can be decreased whereby the maximum acceleration rate and the maximum deceleration rate can be increased.

The ball screw 12 is driven synchronously via both ends, so that its torsion occurred in feeding steps can be averaged or reduced whereby the feeding accuracy can be improved.

To the contrary, in a drive device in which a ball screw is driven via only one end by a single servo motor in such a case as before-said conventional drive device, the torsion of the ball screw depends on the position of the ball nut, between two ends of the ball screw whereby the feeding accuracy is deteriorated.

## Claims

1. A drive device for a feed member in a numerical controlled machine tool in which the feed member (11) is driven in a feeding direction by a ball screw (12) and a ball nut (13), the ball screw (12) being parallel to the feeding direction and rotatably supported by bearings (17) to be driven, the ball nut (13) being fixedly mounted on the feed member (11) and meshing with the ball screw (12) via balls, wherein the ball screw (12) is connected at its both ends to two servo motors (14a, 14b), respectively, and the two servo motors (14a, 14b) are so synchronously operated that the ball screw (12) is rotated in a predetermined rotation direction whereby the feed member (11) is fed in the corresponding feeding direction.

2. The drive device for a feed member in a numerical controlled machine tool according to claim 1, wherein the feed member (11) is a table (11).

3. The drive device for a feed member in a numerical controlled machine tool according to claim 1, wherein the feed member (11) is a saddle.

4. The drive device for a feed member in a numerical controlled machine tool according to claim 1, wherein the feed member (11) is a head.

5. The drive device for a feed member in a numerical controlled machine tool according to one of the claims 1 to 4, wherein the ball nut (13) is a double type.

6. The drive device for a feed member in a numerical controlled machine tool according to one of the claims 1 to 5, wherein the diameter of the ball screw (12) is smaller than that of a single drive type in which a ball screw is driven by a single servo motor connected to one end thereof.

7. The drive device for a feed member in a numerical controlled machine tool according to one of the claims 1 to 6, wherein the rotor inertia of each servo motor (14a, 14b) is smaller than that of a single drive type in which a single servo motor is connected to one end of a ball screw.
